# EUROPÄISCHE PATENTSCHRIFT

(11) **EP 4 448 974 B1**
(45) Veröffentlichungstag und Bekanntmachung des Hinweises auf die Patenterteilung: **03.12.2025**
(21) Anmeldenummer: 22835681.2
(22) Anmeldetag: 12.12.2022
(51) Int. Cl.: F16B 25/00, F16B 25/10, E04H 12/22, F16B 23/00

(54) **SCHRAUBFUNDAMENT ZUR BEFESTIGUNG VON ELEMENTEN IN EINEM UNTERGRUND MIT EINEM ROHRFÖRMIGEN KÖRPER**
GROUND SCREW FOR FASTENING ELEMENTS IN A SUBSTRATE, HAVING A TUBULAR BODY
VIS AU SOL POUR FIXER DES ÉLÉMENTS DANS UN SUBSTRAT, COMPRENANT UN CORPS TUBULAIRE

(30) Priorität: 15.12.2021 DE 102021133240
(43) Veröffentlichungstag der Anmeldung: 23.10.2024
(73) Patentinhaber: Winkelmann Foundation Screw Sp. z o.o., 59 - 200 Legnica (PL)
(72) Erfinder: WINKELMANN, Heinrich, 48317 Drensteinfurt (DE); RUDERT, Bernd, 59229 Ahlen (DE)
(74) Vertreter: Meinke, Jochen
(86) Internationale Anmeldenummer: PCT/EP2022/085380
(87) Internationale Veröffentlichungsnummer: WO 2023/110747

(56) Entgegenhaltungen:
- DE-A1- 102010 062 272
- DE-B3- 102019 128 030
- GB-A- 2 552 176
- US-A1- 2013 174 628

## Beschreibung

Die Erfindung betrifft ein Schraubfundament zur Befestigung von Elementen in einem Untergrund mit einem rohrförmigen Körper aus einer ersten Metalllegierung, welcher ausgehend von einem hinteren Ende einen zylindrischen Bereich und daran axial angrenzend einen zu einer Einführspitze zulaufenden konischen Vorderabschnitt aufweist, wobei wenigstens der Vorderabschnitt wenigstens bereichsweise mit einer gewindeartigen Außenkontur zum Einschrauben in den Untergrund versehen ist, wobei die Einführspitze geschlossen ist. Außerdem betrifft die Erfindung ein Verfahren zur Herstellung eines solchen Schraubfundamentes.

Schraubfundamente sind in verschiedenen Ausführungen bekannt. Sie können am hinteren Ende zum Einstecken von Pfählen oder Stäben ausgebildet sein oder alternativ am hinteren Ende einen platten- bzw. flanschartigen Befestigungsansatz aufweisen, an den andere Elemente, z.B. Rahmen od. dgl., befestigt werden können.

Ein Schraubfundament mit den Merkmalen des Oberbegriffes des Patentanspruches 1 ist aus DE 10 2019 128 030 B3 bekannt. Dieses Schraubfundament wird aus einem zylindrischen Rohr als Ausgangsform spanlos ausschließlich durch Drückwalzen hergestellt. Dabei wird ein zu einer Einführspitze zulaufender konischer Vorderabschnitt angeformt und der Vorderabschnitt wenigstens bereichsweise mit einer gewindeartigen Außenkontur zum Einschrauben in das Erdreich versehen. Das Schraubfundament wird somit allein durch Drückwalzen hergestellt, wodurch der Herstellaufwand gering ist und präzise und reproduzierbare Bauteile erzeugt werden können. Als Ausgangsform kann ein gezogenes oder geschweißtes Rohr verwendet werden.

In der Praxis hat sich herausgestellt, dass bei einem solchen Schraubfundament das Einschrauben bei bestimmten Bodenverhältnissen nur schwierig oder gar nicht möglich ist oder die Verankerung im Untergrund nicht ausreichend ist, um ein ausreichend stabiles Fundament zu bilden.

Aufgabe der Erfindung ist es, eine Lösung zu schaffen, welche ein einfach herstellbares Schraubfundament schafft, das für beliebige Bodenverhältnisse geeignet ist.

Diese Aufgabe wird bei einem Schraubfundament der eingangs bezeichneten Art erfindungsgemäß dadurch gelöst, dass die Einführspitze mit einer Schweißnaht verschlossen ist, welche auf den vorderen stirnseitigen Bereich der Einführspitze aufgebracht ist, wobei die Schweißnaht aus einer zweiten Metalllegierung besteht, die eine höhere Festigkeit und Härte als die erste Metalllegierung aufweist.

Gegenüber einer nur zusammengedrückten oder gehämmerten Einführspitze wird durch ein Schraubfundament mit einer derart ausgebildeten Einführspitze die Festigkeit der Einführspitze wesentlich erhöht, so dass das Einschrauben des Schraubfundamentes auch bei Untergründen möglich ist, die besonders fest sind oder in denen die Einführspitze auf Steine od. dgl. trifft. Die Schweißnaht bildet dabei eine Bohrspitze mit höherer Festigkeit und Härte.

Dabei ist besonders bevorzugt vorgesehen, dass die erste Metalllegierung ein Corten-Stahl oder ein Edelstahl ist, wodurch das Schraubfundament gegen Korrosion geschützt ist.

In besonders bevorzugter Ausgestaltung ist vorgesehen, dass die gewindeartige Außenkontur eine abgerundete Flankenspitze und/oder einen abgerundeten Flankengrund aufweist. Dadurch wird einerseits das Einschrauben des Schraubfundamentes erleichtert und andererseits wird das Material des Untergrundes besser verdrängt und dadurch komprimiert, was die Verankerung des Schraubfundamentes im Untergrund verbessert, in dem sich das Material des Untergrundes gegen das Schraubfundament presst.

Die Steigung der gewindeartigen Außenkontur ist bevorzugt zwei- bis zehnmal größer als die Flankenbreite am Flankendurchmesser. Je nach Beschaffenheit des Untergrundes kann die Gewindekontur gezielt angepasst werden, um eine bessere Verankerung im Untergrund zu erreichen. Durch Vergrößerung der Mantelfläche lässt sich der Reibwert erhöhen.

Die Flanken können bevorzugt ein- oder beidseitig wenigstens eine Abstufung aufweisen, d.h. sie verlaufen dann nicht geradlinig, sondern zum Kerndurchmesser hin in Richtung zum benachbarten Tal der gewindeartigen Außenkontur verbreitert.

Ferner kann vorteilhaft auch vorgesehen sein, dass die zur Flankenspitze zusammenlaufenden Flanken wenigstens bereichsweise zusammengedrückt sind. Dadurch liegen die benachbarten Flanken bereichsweise aneinander an, wodurch die Stabilität der Gewindeflanken erhöht wird.

Die Erfindung betrifft auch ein Verfahren zur Herstellung eines Schraubfundamentes, bei welchem ein rohrförmigen Körper als Ausgangsform aus einer ersten Metalllegierung bereitgestellt wird, welcher derart umgeformt wird, dass er ausgehend von einem hinteren Ende einen zylindrischen Bereich und daran axial angrenzend einen zu einer Einführspitze zulaufenden konischen Vorderabschnitt aufweist, wobei wenigstens der Vorderabschnitt wenigstens bereichsweise mit einer gewindeartigen Außenkontur zum Einschrauben in den Untergrund versehen wird, wobei die Einführspitze verschlossen wird. Dabei ist erfindungsgemäß vorgesehen, dass zum vollständigen Verschließen der Einführspitze auf den vorderen stirnseitigen Bereich der Einführspitze eine Schweißnaht aufgebracht wird, wobei die Schweißnaht aus einer zweiten Metalllegierung besteht, die eine höhere Festigkeit und Härte als die erste Metalllegierung aufweist.

Die Erfindung ist nachstehend anhand der Zeichnung beispielhaft näher erläutert. Diese zeigt in
- Fig. 1: eine perspektivische Darstellung eines Schraubfundamentes,
- Fig. 2: eine vergrößerte perspektivische Darstellung der Einführspitze ohne Schweißnaht,
- Fig. 3: die Einführspitze nach Fig. 2 mit Schweißnaht,
- Fig. 4: eine Seitenansicht des Schraubfundamentes und in den
- Fig. 5 - 8: jeweils einen Schnitt durch die gewindeartige Außenkontur in verschiedenen Ausgestaltungen.

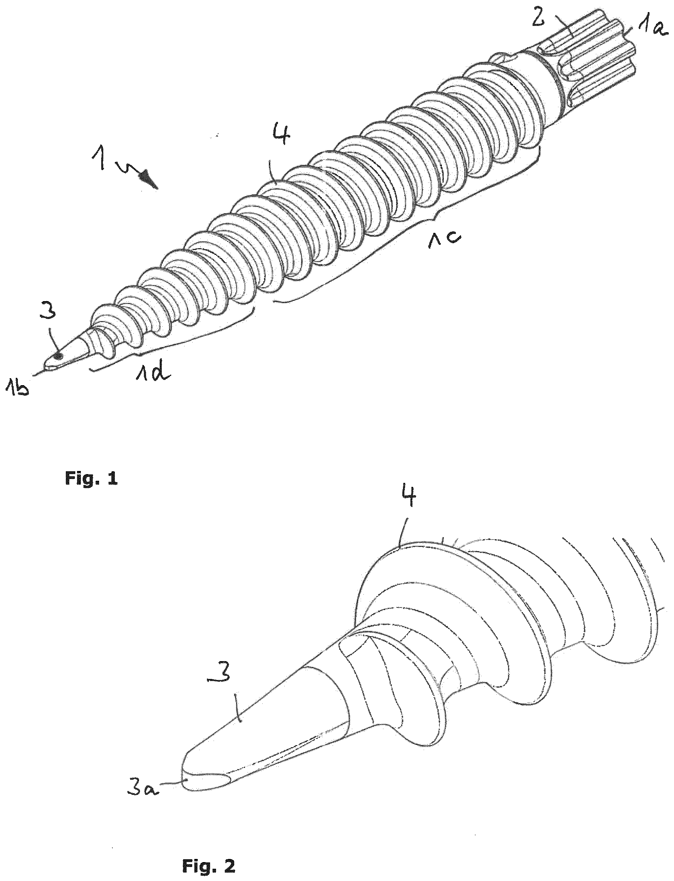

Ein einteiliges Schraubfundament ist in Fig. 1 allgemein mit 1 bezeichnet. Dieses Schraubfundament 1 weist beim Ausführungsbeispiel nach Fig. 1 ein hinteres Ende 1a und ein vorderes Ende 1b auf. In das hintere rohrförmige Ende 1a ist eine Kontur 2 für ein nicht dargestelltes Einschraubwerkzeug oder zum Aufstecken eines rohrförmigen Verlängerungselementes eingeformt. Axial angrenzend an diese Kontur 2 weist das Schraubfundament 1 einen zylindrischen Bereich 1c und daran nach vorne angrenzend einen zu einer Einführspitze 3 am vorderen Ende 1b konisch zulaufenden Vorderabschnitt 1d auf.

Sowohl der Vorderabschnitt 1d als auch der zylindrische Bereich 1c sind zumindest bereichsweise mit einer gewindeartigen Außenkontur 4 versehen, welche vorzugsweise ausschließlich durch Drückwalzen geformt wird. Zur näheren Erläuterung wird hierzu auf die Druckschrift DE 10 2019 128 030 B3 verwiesen.

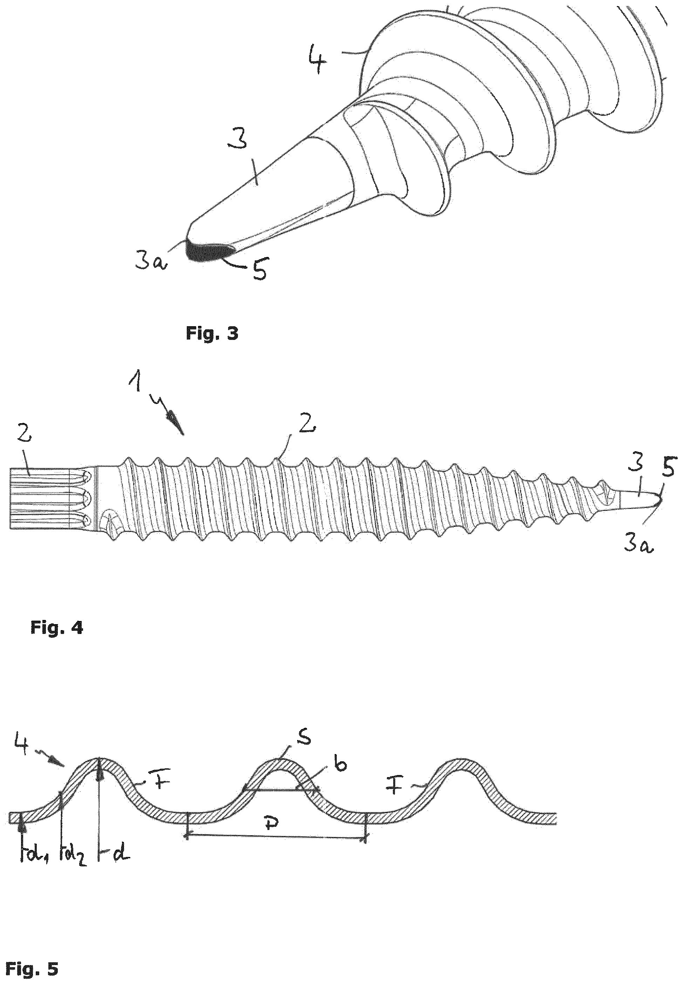

Das Schraubfundament 1 wird bevorzugt im Wesentlichen nur durch Drückwalzen aus einem rohrförmigen Körper als Ausgangsform hergestellt, wobei die Einführspitze 3 durch Zusammendrücken od. dgl. weitgehend geschlossen wird. Zum vollständigen Verschließen der Einführspitze 3 wird eine Schweißnaht 5 aufgebracht, und zwar im Wesentlichen im gesamten vorderen stirnseitigen Bereich 3a, wie dies in Fig. 3 angedeutet ist. Dabei besteht die Schweißnaht 5 aus einer zweiten Metalllegierung, die eine höhere Festigkeit und Härte als eine erste Metalllegierung des rohrförmigen Körpers des Schraubfundamentes 1 aufweist. Die Schweißnaht 5 bildet dadurch eine Bohrspitze mit höherer Festigkeit und Härte.

Neben der vorbeschriebenen Ausbildung der Einführspitze 3 weist das erfindungsgemäße Schraubfundament besondere Gestaltungen der gewindeartigen Außenkontur 4 auf, welche beispielhaft in den Fig. 5 bis 8 dargestellt sind.

In Fig. 4 ist ein erstes Ausführungsbeispiel der gewindeartigen Außenkontur dargestellt. Die gewindeartige Außenkontur 4 weist einen Kerndurchmesser d₁, einen Flankendurchmesser d₂ und einen Außendurchmesser D auf. Die Steigung ist mit P bezeichnet. Definitionsgemäß ist die Steigung der Abstand von zwei Gewindetälern. Die Flanken des Gewindes sind mit F bezeichnet, die jeweils zu einer gemeinsamen Flankenspitze S zusammenlaufen. Die Flankenbreite am Flankendurchmesser d₂ ist mit b bezeichnet.

Bei allen Ausführungsformen der gewindeartigen Außenkontur 4 ist die Flankenspitze S abgerundet ausgebildet, wodurch beim Einschrauben des Schraubfundamentes 1 in den Untergrund das Material des Untergrundes verdrängt und komprimiert wird und ein Einschneiden und Abschälen vermieden wird.

Beim Ausführungsbeispiel nach Fig. 5 ist die Steigung P der gewindeartigen Außenkontur 4 etwa 2,5-mal größer als die Flankenbreite b am Flankendurchmesser d₂.

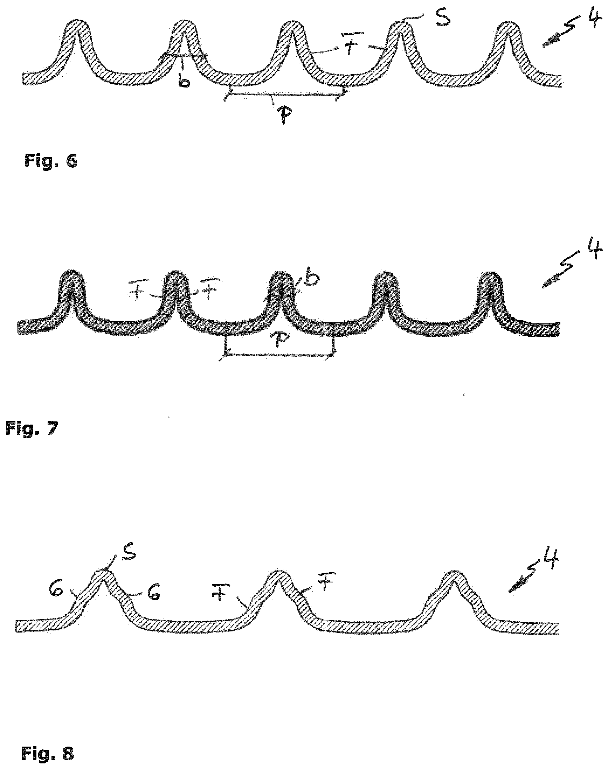

Die Ausführungsform nach Fig. 6 unterscheidet sich von derjenigen nach Fig. 5 im Wesentlichen dadurch, dass die Flankenbreite b am Flankendurchmesser d₂ gegenüber der Ausführungsform nach Fig. 4 verringert ist, dabei ist die Steigung P etwa 3,2-mal größer als die Flankenbreite b am Flankendurchmesser d₂.

Die Ausführungsform nach Fig. 7 unterscheidet sich von derjenigen nach Fig. 6 dadurch, dass die zur Flankenspitze S zusammenlaufenden Flanken F wenigstens bereichsweise zusammengedrückt sind, wodurch die Flanken F bereichsweise aneinander anliegen und dadurch eine höhere Festigkeit aufweisen. Die Flankenbreite b ist dadurch verringert, so dass bei diesem Ausführungsbeispiel die Steigung P etwa fünfmal größer als die Flankenbreite b ist.

Bei der Ausführungsform nach Fig. 8 weisen die Flanken F etwa im Bereich des Flankendurchmessers d₂ eine Abstufung 6 auf. Diese Abstufung 6 kann auch nur einseitig vorgesehen sein.

Natürlich ist die Erfindung nicht auf die dargestellten Ausführungsbeispiele beschränkt. Weitere Ausgestaltungen sind möglich, ohne den Grundgedanken zu verlassen.

### Bezugszeichenliste:

- 1: Schraubfundament
- 1a: hinteres Ende
- 1b: vorderes Ende
- 1c: zylindrischer Bereich
- 1d: konischer Vorderabschnitt
- 2: Kontur
- 3: Einführspitze
- 3a: vorderer Bereich
- 4: gewindeartige Außenkontur
- 5: Schweißnaht
- 6: Abstufung

- b: Flankenbreite
- d₁: Kerndurchmesser
- d₂: Flankendurchmesser
- d: Außendurchmesser
- F: Flanken
- P: Steigung
- S: Spitze

## Patentansprüche

1. Schraubfundament zur Befestigung von Elementen in einem Untergrund mit einem rohrförmigen Körper aus einer ersten Metalllegierung, welcher ausgehend von einem hinteren Ende (1a) einen zylindrischen Bereich (1c) und daran axial angrenzend einen zu einer Einführspitze (3) zulaufenden konischen Vorderabschnitt (1d) aufweist, wobei wenigstens der Vorderabschnitt (1d) wenigstens bereichsweise mit einer gewindeartigen Außenkontur (4) zum Einschrauben in den Untergrund versehen ist, wobei die Einführspitze (3) geschlossen ist,
**dadurch gekennzeichnet,**
**dass** die Einführspitze (3) mit einer Schweißnaht (5) verschlossen ist, welche auf den vorderen stirnseitigen Bereich (3a) der Einführspitze (3) aufgebracht ist, wobei die Schweißnaht (5) aus einer zweiten Metalllegierung besteht, die eine höhere Festigkeit und Härte als die erste Metalllegierung aufweist.

2. Schraubfundament nach Anspruch 1,
**dadurch gekennzeichnet,**
**dass** die erste Metalllegierung ein Corten-Stahl oder ein Edelstahl ist.

3. Schraubfundament nach Anspruch 1 oder 2,
**dadurch gekennzeichnet,**
**dass** die gewindeartige Außenkontur (4) eine abgerundete Flankenspitze (S) aufweist.

4. Schraubfundament nach einem oder mehreren der Ansprüche 1 bis 3,
**dadurch gekennzeichnet,**
**dass** die gewindeartige Außenkontur (4) einen abgerundeten Flankengrund aufweist.

5. Schraubfundament nach einem oder mehreren der Ansprüche 1 bis 4,
**dadurch gekennzeichnet,**
**dass** die Steigung (P) der gewindeartigen Außenkontur (4) zwei- bis zehnmal größer als die Flankenbreite (b) am Flankendurchmesser (d₂) ist.

6. Schraubfundament nach einem oder mehreren der Ansprüche 1 bis 5,
**dadurch gekennzeichnet,**
**dass** die Flanken (F) ein- oder beidseitig wenigstens eine Abstufung (6) aufweisen.

7. Schraubfundament nach einem oder mehreren der Ansprüche 1 bis 6,
**dadurch gekennzeichnet,**
**dass** die zur Flankenspitze (S) zusammenlaufenden Flanken (F) wenigstens bereichsweise zusammengedrückt sind.

8. Verfahren zur Herstellung eines Schraubfundamentes (1), bei welchem ein rohrförmigen Körper als Ausgangsform aus einer ersten Metalllegierung bereitgestellt wird, welcher derart umgeformt wird, dass er ausgehend von einem hinteren Ende (1a) einen zylindrischen Bereich (1c) und daran axial angrenzend einen zu einer Einführspitze (3) zulaufenden konischen Vorderabschnitt (1d) aufweist, wobei wenigstens der Vorderabschnitt (1d) wenigstens bereichsweise mit einer gewindeartigen Außenkontur (4) zum Einschrauben in den Untergrund versehen wird, wobei die Einführspitze (3) verschlossen wird,
**dadurch gekennzeichnet,**
**dass** zum vollständigen Verschließen der Einführspitze (3) auf den vorderen stirnseitigen Bereich (3a) der Einführspitze (3) eine Schweißnaht (5) aufgebracht wird, wobei die Schweißnaht (5) aus einer zweiten Metalllegierung besteht, die eine höhere Festigkeit und Härte als die erste Metalllegierung aufweist.

## Claims

1. Ground screw for fastening elements in a ground, with a tubular body made of a first metal alloy, which, starting from a rear end (1a), has a cylindrical region (1c) and, axially adjacent thereto, a conical front section (1d) tapering to an insertion tip (3), wherein at least the front section (1d) is provided at least in some regions with a thread-like outer contour (4) for screwing into the ground, wherein the insertion tip (3) is closed,
**characterized in**
**that** the insertion tip (3) is closed by a weld seam (5), which is applied to the front end region (3a) of the insertion tip (3), wherein the weld seam (5) consists of a second metal alloy which has a higher strength and hardness than the first metal alloy.

2. Ground screw according to claim 1,
**characterized in**
**that** the first metal alloy is Corten steel or stainless steel.

3. Ground screw according to claim 1 or 2,
**characterized in**
**that** the thread-like outer contour (4) has a rounded flank tip (S).

4. Ground screw according to one or more of claims 1 to 3,
**characterized in**
**that** the thread-like outer contour (4) has a rounded flank base.

5. Ground screw according to one or more of claims 1 to 4,
**characterized in**
**that** the pitch (P) of the thread-like outer contour (4) is two to ten times greater than the flank width (b) at the flank diameter (d₂).

6. Ground screw according to one or more of claims 1 to 5,
**characterized in**
**that** the flanks (F) have at least one step (6) on one or both sides.

7. Ground screw according to one or more of claims 1 to 6,
**characterized in**
**that** the flanks (F) converging towards the flank tip (S) are compressed at least in some regions.

8. Method for manufacturing a ground screw (1), in which a tubular body is provided as the initial form from a first metal alloy, which is reshaped such that, starting from a rear end (1a), it has a cylindrical region (1c) and, axially adjacent thereto, a conical front section (1d) tapering to an insertion tip (3), wherein at least the front section (1d) is provided at least in some regions with a thread-like outer contour (4) for screwing into the ground, wherein the insertion tip (3) is closed,
**characterized in**
**that** in order to completely seal the insertion tip (3), a weld seam (5) is applied to the front end region (3a) of the insertion tip (3), wherein the weld seam (5) consists of a second metal alloy which has a higher strength and hardness than the first metal alloy.

## Revendications

1. Fondation à vis pour la fixation d'éléments dans un sol avec un corps tubulaire en un premier alliage métallique, lequel présente à partir d'une extrémité arrière (1a) une zone cylindrique (1c) et, adjacente axialement à celle-ci, une section avant conique (1d) se terminant par une pointe d'insertion (3), dans laquelle au moins la section avant (1d) est dotée, au moins par zones, d'un contour extérieur à filetage (4) destiné à être vissé dans le sol, dans laquelle la pointe d'insertion (3) est fermée,
**caractérisée en ce que**
la pointe d'insertion (3) est scellée avec un cordon de soudure (5), lequel est appliqué sur la zone frontale avant (3a) de la pointe d'insertion (3), dans laquelle le cordon de soudure (5) est constitué d'un second alliage métallique qui présente une résistance et une dureté supérieures à celles du premier alliage métallique.

2. Fondation à vis selon la revendication 1,
**caractérisée en ce que**
le premier alliage métallique est un acier Corten ou un acier inoxydable.

3. Fondation à vis selon la revendication 1 ou 2,
**caractérisée en ce que**
le contour extérieur à filetage (4) présente une pointe de flanc arrondie (S).

4. Fondation à vis selon une ou plusieurs des revendications 1 à 3,
**caractérisée en ce que**
le contour extérieur à filetage (4) présente une base de flanc arrondie.

5. Fondation à vis selon une ou plusieurs des revendications 1 à 4,
**caractérisée en ce que**
l'inclinaison (P) du contour extérieur à filetage (4) est deux à dix fois plus grande que la largeur de flanc (b) au diamètre de flanc (d₂).

6. Fondation à vis selon une ou plusieurs des revendications 1 à 5,
**caractérisée en ce que**
les flancs (F) présentent au moins une gradation (6) d'un ou des deux côtés.

7. Fondation à vis selon une ou plusieurs des revendications 1 à 6,
**caractérisée en ce que**
les flancs (F) convergeant vers la pointe de flanc (S) sont comprimés au moins par zones.

8. Procédé de fabrication d'une fondation à vis (1), dans lequel un corps tubulaire est fourni en tant que forme de départ à partir d'un premier alliage métallique, lequel est transformé de sorte qu'il présente, à partir d'une extrémité arrière (1a), une zone cylindrique (1c) et, adjacente axialement à celle-ci, une section avant conique (1d) se terminant par une pointe d'insertion (3), dans lequel au moins la section avant (1d) est dotée, au moins par zones, d'un contour extérieur à filetage (4) destiné à être vissé dans le sol, dans lequel la pointe d'insertion (3) est scellée,
**caractérisé en ce que**
pour sceller entièrement la pointe d'insertion (3), un cordon de soudure (5) est appliqué sur la partie frontale avant (3a) de la pointe d'insertion (3), dans lequel le cordon de soudure (5) est constitué d'un second alliage métallique qui présente une résistance et une dureté supérieures à celles du premier alliage métallique.
